# EUROPEAN PATENT APPLICATION

(11) **EP 4 804 157 A2**
(43) Date of publication of application: **09.09.2026**
(21) Application number: 26156103.9
(22) Date of filing: 03.02.2026
(51) Int. Cl.: G08B 21/02, G08B 21/24, H04W 4/029

(54) **SIGNATURE INTELLIGENCE FOR DETECTION OF UNWANTED DEVICES**

(30) Priority: 13.02.2025 US 202519052346
(71) Applicant: Pryvaxy Company Ltd., 4632455 Herzelya (IL)
(72) Inventor: Yehezkel, Shmuel, Herzelya (IL)
(74) Representative: Beck Greener LLP

(57) **Abstract**

A method for monitoring a property (22) includes receiving by a processor (34), from a Wi-Fi management system (38) of the property, data relating to communication exchanged between one or more wireless-enabled devices on the property and one or more Wi-Fi access points (44) on the property, based on the data, identifying one or more baseline location-related attributes of the devices and one or more characteristics and an estimated location (88) of a particular one of the devices (24), and based on the baseline location-related attributes and the characteristics, outputting an alert (35) indicating that the particular device may be unwanted at least at the estimated location. Other embodiments are also described.

## Description

Embodiments of the present invention are related generally to the field of communications, and particularly to the monitoring of wireless communication exchanged with wireless-enabled devices.

Unwanted devices create significant privacy and security risks in sensitive spaces. Key threat categories include hidden surveillance devices (e.g., cameras and audio recorders), lost and abandoned devices, and unauthorized devices.

In accordance with an aspect of the present invention, there is provided a method for monitoring a property. The method includes receiving by a processor, from a Wi-Fi management system of the property, data relating to communication exchanged between one or more wireless-enabled devices on the property and one or more Wi-Fi access points on the property. The method further includes, based on the data, identifying one or more baseline location-related attributes of the devices, and one or more characteristics and an estimated location of a particular one of the devices. The method further includes, based on the baseline location-related attributes and the characteristics, outputting an alert indicating that the particular device may be unwanted at least at the estimated location.

In some embodiments, the alert indicates that the particular device may be a malicious surveillance device.

In some embodiments, the alert indicates that the particular device may be lost, forgotten, or abandoned.

In some embodiments, the alert indicates that the particular device may be unauthorized.

In some embodiments, the alert indicates that the particular device may have been removed from its rightful location.

In some embodiments, the property includes a hotel.

In some embodiments, the data includes the estimated location, and identifying the estimated location includes extracting the estimated location from the data.

In some embodiments, the data includes respective estimated distances from one or more of the Wi-Fi access points to the particular device, and identifying the estimated location includes computing the estimated location based on the estimated distances.

In some embodiments, identifying the estimated location includes:
extracting, from the data, a preliminary estimated location of the device and respective signal strengths with which the communication from the device was received by the access points;
identifying, from a floorplan of the property, respective materials of any signal-attenuating structures between the preliminary estimated location and the access points;
computing respective estimated distances between the device and the access points, based on the signal strengths and the materials of the signal-attenuating structures; and
computing the estimated location based on the estimated distances.

In some embodiments, the method further includes identifying, from the floorplan, respective thicknesses of the signal-attenuating structures, and computing the estimated distances includes computing the estimated distances based on the thicknesses.

In some embodiments, the method further includes, based on the data, identifying an estimated location history of the device on the property, and the alert further indicates the estimated location history.

In some embodiments, the characteristics include a type of the particular device.

In some embodiments, the data includes an identifier of the particular device communicated by the particular device, and identifying the type of the particular device includes identifying the type of the particular device based on the identifier.

In some embodiments, the identifier includes a media access control address, and identifying the type of the particular device includes identifying the type of the particular device by querying a database, in which multiple organizationally unique identifiers are associated with respective device types, for the device type associated with the organizationally unique identifier of the media access control address.

In some embodiments, the characteristics include behavioral characteristics describing a manner in which the particular device communicates.

In some embodiments,
identifying the baseline location-related attributes includes identifying one or more others of the devices that are usually co-located with the particular device,
the method further includes tracking the particular device despite the particular device having changed an identifier of the particular device, based on the particular device being co-located with the others of the devices, and
outputting the alert includes outputting the alert based on tracking the particular device.

In some embodiments,
the property has multiple rooms,
the method further includes ascertaining respective locations of the rooms by analyzing a floorplan of the property,
identifying the baseline location-related attributes includes identifying, for a particular one of the rooms, a room signature including those of the devices that are usually co-located in the particular room, and
outputting the alert includes outputting the alert in response to a deviation from the room signature.

In some embodiments, the room signature does not include the particular device, and the method further includes, based on the estimated location of the device and the locations of the rooms, ascertaining that the device is likely located in the particular room, thereby causing the deviation.

In some embodiments, the room signature includes the particular device, and the method further includes, based on the estimated location of the device and the locations of the rooms, ascertaining that the device is likely not located in the particular room, thereby causing the deviation.

In some embodiments,
identifying the baseline location-related attributes includes identifying respective person signatures for one or more people on the property, each person signature including those of the devices that are usually co-located on a respective one of the people, and
outputting the alert includes outputting the alert based on the person signatures.

In some embodiments, outputting the alert includes outputting the alert in response to the particular device being included in one of the person signatures but not being co-located with one or more others of the devices included in the person signature.

In some embodiments,
the property has multiple rooms,
the method further includes:
   ascertaining respective locations of the rooms by analyzing a floorplan of the property; and
   based on the estimated location of the device and the locations of the rooms, ascertaining that the device is likely located in a particular one of the rooms, and outputting the alert includes:
      ascertaining, based on the person signatures, whether the room is likely occupied; and
      outputting the alert in response to ascertaining whether the room is likely occupied.

In some embodiments, outputting the alert includes:
inputting the characteristics of the particular device to a machine-learned model trained to identify unwanted devices, and
outputting the alert based on output from the machine-learned model.

In accordance with another aspect of the present invention, there is provided a system for monitoring a property. The system includes a communication interface and a processor configured to receive via the communication interface, from a Wi-Fi management system of the property, data relating to communication exchanged between one or more wireless-enabled devices on the property and one or more Wi-Fi access points on the property, to identify, based on the data, one or more baseline location-related attributes of the devices and one or more characteristics and an estimated location of a particular one of the devices, and to output an alert indicating that the particular device may be unwanted at least at the estimated location, based on the baseline location-related attributes and the characteristics.

In accordance with yet another aspect of the present invention, there is provided a computer software product for monitoring a property, the product including a tangible non-transitory computer-readable medium in which program instructions are stored. The instructions, when read by a processor, cause the processor to receive, from a Wi-Fi management system of the property, data relating to communication exchanged between one or more wireless-enabled devices on the property and one or more Wi-Fi access points on the property, to identify, based on the data, one or more baseline location-related attributes of the devices and one or more characteristics and an estimated location of a particular one of the devices, and to output an alert indicating that the particular device may be unwanted at least at the estimated location, based on the baseline location-related attributes and the characteristics.

There is also disclosed herein examples of a method for monitoring a property having multiple rooms. The method includes, using a processor, ascertaining respective locations and types of the rooms by analyzing a floorplan of the property. The method further includes receiving, from a Wi-Fi management system of the property, data relating to communication exchanged between one or more wireless-enabled devices on the property and one or more Wi-Fi access points on the property. The method further includes, based on the data, identifying one or more characteristics and an estimated location of one of the devices. The method further includes, based on the estimated location of the device and the locations of the rooms, identifying the room in which the device is likely located. The method further includes, based on the characteristics of the device and the type of the identified room, outputting an alert indicating that the device may be unwanted at least at the estimated location.

In some examples, the alert indicates that the device may be a malicious surveillance device.

In some examples, the alert indicates that the device may be lost, forgotten, or abandoned.

In some examples, the property includes a hotel.

In some examples, the method further includes, in response to ascertaining the respective types of the rooms, assigning respective sensitivity scores to the rooms, and outputting the alert includes outputting the alert based on the sensitivity score of the identified room.

In some examples, assigning the sensitivity scores includes assigning the sensitivity scores based on respective expected privacy levels associated with the types of the rooms.

In some examples, the method further includes, using the processor, obtaining the floorplan via an application programming interface of the Wi-Fi management system.

In some examples, the data includes the estimated location, and identifying the estimated location includes extracting the estimated location from the data.

In some examples, the data includes respective estimated distances from one or more of the Wi-Fi access points to the device, and identifying the estimated location includes computing the estimated location based on the estimated distances.

In some examples, the method further includes, based on the data, identifying an estimated location history of the device on the property, and the alert further indicates the estimated location history.

In some examples, outputting the alert includes outputting the alert in response to the device likely having been in the room for longer than a predefined maximum duration.

In some examples, the method further includes:
based on the data and/or other data relating to other communication exchanged between one or more other wireless-enabled devices on at least one other property and one or more other Wi-Fi access points on the at least one other property, tracking the other devices; and
defining the maximum duration based on the tracking.

In some examples, the method further includes selecting the predefined maximum duration from multiple predefined maximum durations corresponding to different respective room types.

In some examples, the method further includes selecting the predefined maximum duration from multiple predefined maximum durations corresponding to different respective geographic areas.

In some examples, the method further includes selecting the predefined maximum duration from multiple predefined maximum durations corresponding to different respective time slots.

In some examples, the method further includes selecting the predefined maximum duration from multiple predefined maximum durations corresponding to different respective property types.

In some examples, identifying the estimated location includes:
extracting, from the data, a preliminary estimated location of the device and respective signal strengths with which the communication from the device was received by the access points;
identifying, from the floorplan, respective materials of any signal-attenuating structures between the preliminary estimated location and the access points;
computing respective estimated distances between the device and the access points, based on the signal strengths and the materials of the signal-attenuating structures; and
computing the estimated location based on the estimated distances.

In some examples, the method further includes identifying, from the floorplan, respective thicknesses of the signal-attenuating structures, and computing the estimated distances includes computing the estimated distances based on the thicknesses.

In some examples, the characteristics include a type of the device.

In some examples, the data includes an identifier of the device communicated by the device, and identifying the type of the device includes identifying the type of the device based on the identifier.

In some examples, the identifier includes a media access control address, and identifying the type of the device includes identifying the type of the device by querying a database, in which multiple organizationally unique identifiers are associated with respective device types, for the device type associated with the organizationally unique identifier of the media access control address.

In some examples, the characteristics include behavioral characteristics describing a manner in which the device communicates.

In some examples, the method further includes, based on the data, identifying a respective room signature for each room of at least some of the rooms, each room signature including those of the devices that are usually co-located in the room, and outputting the alert includes outputting the alert in response to the room signature for the identified room not including the device.

In some examples, the method further includes, based on the data, identifying respective person signatures for one or more people on the property, each person signature including those of the devices that are usually co-located on a respective one of the people, and outputting the alert includes outputting the alert based on the person signatures.

In some examples, outputting the alert includes outputting the alert in response to the device being included in one of the person signatures but not being co-located with one or more others of the devices included in the person signature.

In some examples, outputting the alert includes:
ascertaining, based on the person signatures, whether the room is likely occupied; and
outputting the alert in response to ascertaining whether the room is likely occupied.

In some examples, outputting the alert includes:
inputting the characteristics of the device to a machine-learned model trained to identify unwanted devices, and
outputting the alert based on output from the machine-learned model.

There is also disclosed herein examples of a system for monitoring a property having multiple rooms. The system includes a communication interface and a processor, configured to ascertain respective locations and types of the rooms by analyzing a floorplan of the property, to receive via the communication interface, from a Wi-Fi management system of the property, data relating to communication exchanged between one or more wireless-enabled devices on the property and one or more Wi-Fi access points on the property, to identify, based on the data, one or more characteristics and an estimated location of one of the devices, to identify the room in which the device is likely located based on the estimated location of the device and the locations of the rooms, and to output an alert, which indicates that the device may be unwanted at least at the estimated location, based on the characteristics of the device and the type of the identified room.

There is also disclosed herein examples of a computer software product for monitoring a property having multiple rooms. The product includes a tangible non-transitory computer-readable medium in which program instructions are stored, which instructions, when read by a processor, cause the processor to ascertain respective locations and types of the rooms by analyzing a floorplan of the property, to receive, from a Wi-Fi management system of the property, data relating to communication exchanged between one or more wireless-enabled devices on the property and one or more Wi-Fi access points on the property, to identify, based on the data, one or more characteristics and an estimated location of one of the devices, to identify the room in which the device is likely located based on the estimated location of the device and the locations of the rooms, and to output an alert, which indicates that the device may be unwanted at least at the estimated location, based on the characteristics of the device and the type of the identified room.

There is also disclosed herein examples of a method for monitoring a property. The method includes receiving by a processor, from a Wi-Fi management system of the property, a preliminary estimated location of a wireless-enabled device on the property and respective signal strengths with which communication from the device was received by one or more Wi-Fi access points on the property. The method further includes identifying by the processor, from a floorplan of the property, respective materials of any signal-attenuating structures between the preliminary estimated location and the access points. The method further includes computing respective estimated distances between the device and the access points, based on the signal strengths and the materials of the signal-attenuating structures, computing an estimated location of the device based on the estimated distances, and outputting an output based on the estimated location.

The present invention will be more fully understood from the following detailed description of embodiments thereof, taken together with the drawings, in which:
Fig. 1 is a schematic illustration of a system for monitoring a property;
Fig. 2 is a schematic representation of baseline location-related attributes that may be identified;
Fig. 3 is a module diagram for various modules executed by a processor;
Fig. 4 is a flow diagram for a method for identifying unwanted devices; and
Fig. 5 is a schematic illustration of an example floorplan that can be analyzed.

### OVERVIEW

Embodiments of the present invention include a system for monitoring wireless-enabled devices on a property, such as a hotel or an office space. Based on the monitoring, the system identifies devices that are likely unwanted at least at their current locations. Types of unwanted devices include:
a malicious device, such as a malicious surveillance device that impinges on the privacy of a sensitive area such as a dressing room, medical facility, hotel room, or restroom;
a device lost, forgotten, or abandoned, e.g., in a public area or temporary-use area (e.g., a hotel room);
a device removed from its proper place; and
an unauthorized device in a restricted area, high-security area, or another regulated area.

To monitor the devices, the system receives data from the Wi-Fi management system of the property, which receives, from the wireless access points on the property, the communication packets exchanged with the devices. Such data includes, for example, the communication packets themselves and/or additional data provided by the access points and/or the management system. Based on the data, the system estimates the location of at least one device, and identifies one or more characteristics, such as the type, of the device. Based on the estimated location and the characteristics, the system may ascertain that the device is likely unwanted on the property, or at least at its estimated location on the property. In response to ascertaining that the device is likely unwanted, the system outputs an alert.

In some embodiments, the system analyzes a floorplan of the property so as to ascertain the respective locations and types of the rooms in the property. Based on this information, the system identifies the type of room in which the device is likely located. When deciding whether the device is unwanted, the system takes the type of room into account. Thus, for example, a camera in a sensitive room such as a restroom may be deemed malicious, whereas a camera in another type of room may be deemed benign. In some embodiments, the system explicitly assigns different respective sensitivity scores to various room types.

Alternatively or additionally, the system identifies any group of devices that are usually co-located with each other in a room or on a person. Subsequently, the system may identify an unwanted device based on these identified "room signatures" and "person signatures." For example, if a device that belongs to a person signature remains in one room while the rest of the person signature leaves the room, the device may have been forgotten or intentionally planted in the room. Similarly, if a device that does not belong to the room signature of a room is seen in the room, the device may have been forgotten or intentionally planted in the room.

### SYSTEM DESCRIPTION

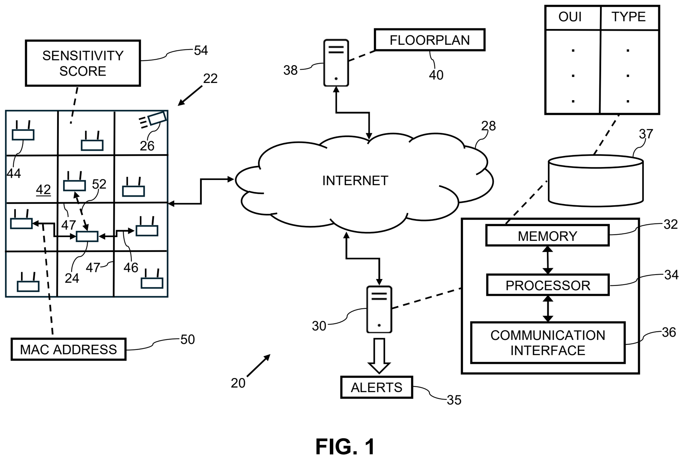

Reference is initially made to Fig. 1, which is a schematic illustration of a system 20 for monitoring a property 22 (also referred to as an "asset"), in accordance with some embodiments of the present invention. Property 22 may have a single room 42 or multiple rooms 42. Examples of properties having multiple rooms include hotels, shopping malls, office buildings, university campuses, and medical facilities.

System 20 comprises a processor 34. System 20 further comprises a memory 32, such as a random access memory, configured to load program instructions for execution by processor 34. Typically, system 20 further comprises a communication interface 36, via which processor 34 exchanges communication over a network 28, such as the Internet. Typically, memory 32, processor 34, and communication interface 36 belong to at least one server 30 that is remote from property 22, such as at least one server belonging to a cloud-computing platform.

As shown in Fig. 1, property 22 contains one or more Wi-Fi access points 44, also known as wireless access points or simply as access points, which collectively provide access to one or more Wi-Fi networks. Wireless-enabled devices in property 22, such as a smartphone 24 and/or a wireless-enabled video camera 26, exchange wireless communication with access points 44, as indicated in Fig. 1 by wireless-communication indicators 46. For example, a device may send an access point 44 a message, such as a request to handshake, which includes an identifier, such as a media access control (MAC) address 50, of the device. Provided the device connects to the access point, the device may further exchange additional communication over the Internet via the access point. Each access point 44 copies the communication packets exchanged therewith to a Wi-Fi management system 38 of the property.

As described in detail below, by monitoring property 22, processor 34 estimates the respective locations of the wireless-enabled devices. Based on these locations, the system may output one or more alerts 35, each alert 35 indicating that a particular device may be unwanted at least at its estimated location. For example, an alert may indicate that the device may be a malicious surveillance device, such as a malicious audio recorder, video camera, or combination thereof. Alternatively, the alert may indicate that the device may be lost, forgotten, or abandoned. Alternatively, the alert may indicate that the device may be unauthorized. Alternatively, the alert may indicate that the device may have been removed from its rightful location.

Typically, at least for multistoried properties, each estimated location includes an estimated horizontal location and an estimated vertical location. For example, in some embodiments, each estimated location is represented by three-dimensional coordinates. (Optionally, the vertical coordinate is the number of the floor on which the device is located, rather than the elevation of the device.) In some embodiments, for a single-story property, each estimated location includes only an estimated horizontal location represented, for example, by two-dimensional coordinates.

In some embodiments, the processor outputs each alert 35 by communicating a message (e.g., an email or a text message) over network 28 and/or over any other network, such as a cellular network. Alternatively or additionally, the processor displays the alert on a computer monitor.

To monitor the property, processor 34 receives, from management system 38, data relating to the communication exchanged between the devices and the access points. This data may include the communication packets themselves, and/or additional data provided by the access points and/or the management system. For example, in some embodiments, the additional data includes the location of each access point, which may be provided to the management system by a user. Alternatively or additionally, the additional data includes the respective signal strengths with which communication from a device was received by one or more of the access points, which are provided by the access points. Typically, each signal strength is expressed in the format of a received signal strength indicator, i.e., as a negative number with units of dBm. Alternatively or additionally, the additional data includes respective distances from the device to the access points, which are estimated, based on the signal strengths, by the access points or the management system. Alternatively or additionally, the additional data includes an estimated location of the device, which is computed by the management system based on one or more such estimated distances, e.g., by triangulating three such estimated distances.

In some embodiments, Wi-Fi management system 38 is configured to push the data to the processor, e.g., periodically with a predefined period. Alternatively or additionally, the management system is configured to allow a pull of the data by the processor via a suitable application programming interface.

In some embodiments, processor 34 is further configured to analyze a floorplan 40 of property 22, which may be represented in Portable Document Format or any other suitable format, so as to ascertain the respective locations of rooms 42. In some embodiments, by analyzing floorplan 40, the processor also ascertains the respective types of (i.e., the processor classifies) the rooms. For example, the processor may locate and classify various types of rooms such as hotel guest rooms, corridors, elevators, shops, concourses, lobbies, dressing rooms, offices, medical examination rooms, and restrooms. Alternatively or additionally, by analyzing floorplan 40, the processor locates access points 44.

In some embodiments, the processor obtains floorplan 40 via an application programming interface of Wi-Fi management system 38. In other embodiments, the floorplan is uploaded directly to server 30.

Based on the data received from Wi-Fi management system 38, the processor identifies one or more characteristics of at least one of the wireless-enabled devices on property 22.

Typically, the identified characteristics include the type of the device. For example, in some embodiments, the processor identifies the type of (i.e., classifies) the device based on a MAC address 50 of the device and/or any other identifier, such as an international mobile equipment identity number, of the device, which is communicated by the device to access points 44 and is thus included in the data from Wi-Fi management system 38. As a specific example, in some embodiments, the processor identifies the type of the device by querying a database 37, in which multiple organizationally unique identifiers (OUIs) are associated with respective device types, for the device type associated with the OUI of MAC address 50.

Alternatively or additionally, these characteristics include behavioral characteristics describing the manner in which the device communicates. Examples of such behavioral characteristics include the frequency with which the device communicates, a volume (e.g., a daily average volume) of data exchanged with the device, the times at which the device communicates, the Internet Protocol addresses with which the device communicates, and any communication protocols used by the device.

In addition to the characteristics of the device, the processor identifies an estimated location of the device, which may be expressed with reference to any suitable coordinate system. For example, for some embodiments in which the data from management system 38 includes an estimated location of the device as computed by the management system, the processor extracts the estimated location from the data. Alternatively, in some embodiments, provided the data includes respective estimated distances from one or more of the Wi-Fi access points to the device, the processor computes the estimated location based on the estimated distances. For example, provided the data includes three such distances, the processor triangulates the distances. To facilitate this calculation, the processor identifies the respective locations of the access points from the data provided by management system 38, from input provided by a user, and/or from floorplan 40.

As noted above, in some embodiments, the data from management system 38 includes an estimated location of a device, which is estimated based on estimated distances from the device to one or more access points, which in turn are estimated based on the received signal strengths. However, typically, the estimated distances do not account for any signal-attenuating structures 47, such as walls or floors/ceilings, between the device and the access points. Thus, the estimated distances tend to be larger than the true distances.

To address this challenge, in some embodiments, the estimated location extracted from the data is treated merely as a preliminary estimate. In addition to the preliminary estimated location, the processor extracts the respective signal strengths with which communication from the device was received by one or more of the access points. In addition, the processor identifies the respective locations of these access points, as described above. The processor further identifies, from floorplan 40, the respective materials of any signal-attenuating structures 47 between the preliminary estimated location and the access points, and, in some embodiments, the respective thicknesses of these signal-attenuating structures 47. Subsequently, the processor computes respective estimated distances 52 between the device and the access points, based on the signal strengths, the materials of the intervening signal-attenuating structures 47 as identified from the floorplan, and, in some embodiments, the thicknesses of the signal-attenuating structures as identified from the floorplan. Next, the processor computes the estimated location based on estimated distances 52.

More generally, the embodiments described above, whereby the location of a device is estimated based on the signal strengths and the materials (and, optionally, thicknesses) of the signal-attenuating structures, may facilitate monitoring a single- or multi-room property for any purpose, such as for commercial or law-enforcement purposes. Following the estimation of the location of at least one device, the processor outputs an output based on the estimated location. In some embodiments, the output explicitly includes the estimated location. Alternatively or additionally, the output includes information based on the estimated location. For example, in some embodiments, as described below in the context of alerting for unwanted devices, the output specifies the room 42 to which the estimated location belongs. Alternatively or additionally, in some embodiments (e.g., for cases in which the property is monitored for location-based advertising), the output specifies stores or other facilities near the device. As another example, in some embodiments, the property is monitored over a period of time, and the output then specifies portions of the property (e.g., restrooms, or stores in a shopping mall) that are visited more frequently than other portions of the property. Such output may facilitate managing the property more effectively.

In some embodiments, based on the estimated location of a device and the locations of rooms 42 (as derived from floorplan 40), the processor identifies the room in which the device is likely located. In other words, given the estimated coordinates of the device, the processor ascertains that the device is likely located in the room that includes these estimated coordinates. Subsequently, based on the characteristics of the device and the type of the identified room (as derived from floorplan 40), the processor may output an alert 35 indicating that the device may be unwanted at least at its estimated location. Typically, alert 35 includes the estimated location and/or a description of the room to which the estimated location belongs.

For example, the processor may identify device characteristics suggestive of a malicious surveillance device. Specifically, for example, the processor may ascertain, using database 37, that the MAC address of the device is associated with a video camera or an audio recorder. Alternatively or additionally, the processor may identify a relatively large volume of data communicated from the device, communication from the device at unusual times or at an unusual frequency, and/or communication with suspicious Internet Protocol addresses. The processor may further ascertain that the device is located in a room having a sensitive type, such as a restroom or a business meeting room, which are sensitive to malicious surveillance. In response thereto, the processor may output an alert 35 indicating that the device may have been maliciously placed in the room.

As another example, the processor may identify a device as a smartphone based on the MAC address of the device and/or based on the behavioral characteristics of the device. The processor may further ascertain that the device has been located in a public room, such as a hotel lobby, for a relatively long time (e.g., for longer than a predefined threshold). In response thereto, the processor may output an alert 35 indicating that the device may be lost, forgotten, or abandoned.

In some embodiments, in response to ascertaining the respective types of rooms 42, the processor assigns respective sensitivity scores 54, which may be numerical or descriptive, to the rooms. Subsequently, after identifying the room in which a device is located, the processor decides whether to output an alert 35 based on the sensitivity score 54 of the room.

In some embodiments, the processor assigns sensitivity scores 54 based on respective expected privacy levels associated with the types of rooms 42. For example, given that the expected privacy level is greater for a restroom than for a hotel lobby, the processor may assign a high sensitivity score to a restroom but a low sensitivity score to a hotel lobby. Advantageously, basing the sensitivity scores on the expected privacy levels is particularly helpful for issuing alerts pertaining to possibly malicious surveillance devices. For example, in response to the low sensitivity score of a hotel lobby, the processor may refrain from outputting an alert for a video camera 26 located therein. On the other hand, in response to the high sensitivity score of a restroom, the processor may output an alert for a video camera 26 located therein.

Alternatively, the processor assigns the sensitivity scores based on another parameter associated with the room types, such as the expected probability of a device being lost, forgotten, or abandoned in the room. For example, a hotel lobby may have a higher sensitivity score than an elevator, given that a device is more likely to be lost or forgotten in a hotel lobby, relative to an elevator. As yet another alternative, the processor assigns, to each room, multiple sensitivity scores based on different respective parameters relevant to different respective types of unwanted devices. Subsequently, when deciding whether to output an alert for a particular type of unwanted device, the processor considers the relevant sensitivity score. For example, the processor may assign, to a hotel lobby, a high sensitivity score for lost devices but a low sensitivity score for malicious surveillance devices. The processor may therefore output an alert for a smartphone 24 in the hotel lobby, but not for a camera 26. On the other hand, for a restroom, the processor may assign a high sensitivity score for both lost devices and malicious surveillance devices, and therefore output an alert both for a smartphone 24 and for a camera 26.

In some embodiments, based on the data from management system 38, the processor further identifies an estimated location history of the device on the property, and the alert 35 for the device further indicates the estimated location history. Advantageously, the estimated location history can facilitate ascertaining, by the recipient of the alert, whether any response to the alert is needed, as well as facilitate this response. For example, if the alert indicates a possibly lost device in a hotel lobby, the hotel management may wish to identify the owner of the device. This action may be facilitated by the location history including a specific hotel room in which the device was previously located.

In some embodiments, the processor outputs an alert in response to the device likely having been in a room for longer than a predefined maximum duration. For example, in response to ascertaining that smartphone 24 is in a restroom, the processor may continue to monitor the location of the smartphone. After a predefined maximum duration - in this case, for example, the maximum amount of time that a person is expected to be in the restroom - the processor may output an alert indicating that the smartphone may be lost or may have been planted maliciously for surveillance. On the other hand, if the smartphone leaves the restroom before the predefined maximum duration, the processor may refrain from outputting an alert.

In some embodiments, based on the data from Wi-Fi management system 38 and/or similar data from one or more other properties, the processor tracks the movement of multiple devices, thereby learning normal staying durations as described below. Subsequently, the processor defines one or more maximum durations based on the tracking.

Typically, different maximum durations are defined for different respective room types. For example, based on the tracking, the processor may learn that a typical visit to a restroom does not exceed 30 minutes and a typical visit to a dressing room does not exceed 40 minutes. The processor may therefore define a maximum duration of 30 minutes for a restroom and 40 minutes for a dressing room. Subsequently, when deciding whether to output an alert for a device that may have been left in a room, the processor selects the predefined maximum duration corresponding to the type of the room from multiple predefined maximum durations corresponding to different respective room types. For example, continuing the example above, if the device is in a restroom, the processor selects the maximum duration of 30 minutes, and therefore outputs an alert if the device was in the restroom for longer than 30 minutes.

Alternatively or additionally, different maximum durations are defined for different respective device types. For example, the maximum duration for a device capable of malicious surveillance, such as a camera, may be less than the maximum duration for another type of device, given the greater risk associated with the former.

Alternatively or additionally, different maximum durations are defined for different respective geographic areas. For example, based on the tracking, the processor may learn that a typical visit to a dressing room is longer in some countries or neighborhoods than in other countries or neighborhoods. Subsequently, when deciding whether to output the alert, the processor selects the predefined maximum duration corresponding to the geographic area of the property from multiple predefined maximum durations corresponding to different respective geographic areas.

Alternatively or additionally, different maximum durations are defined for different respective time slots, such as different respective days and/or time periods of the day. For example, based on the tracking, the processor may learn that a typical visit to a dressing room is longer on weekends, holidays, and outside of typical working hours than on workdays during typical working hours. Subsequently, when deciding whether to output the alert, the processor selects the predefined maximum duration corresponding to the current time slot from multiple predefined maximum durations corresponding to different respective time slots.

Alternatively or additionally, different maximum durations are defined for different respective property types. For example, based on the tracking, the processor may learn that a typical visit to a dressing room is longer in an upscale boutique than in a fast-fashion store. Subsequently, when deciding whether to output the alert, the processor selects the predefined maximum duration corresponding to the type of property 22 from multiple predefined maximum durations corresponding to different respective property types.

In some embodiments, the processor sets the frequency with which data relating to a device is processed responsively to the type of room in which the device is located. For example, for a dressing room or a restroom, in which the risk associated with malicious surveillance devices and lost devices is relatively high, the processor may monitor the data more frequently, relative to other types of rooms.

In some cases, as described above, the processor estimates the location of a device with a relatively high degree of precision, in that the processor identifies the room in which the device is likely located. In other cases, on the other hand, such precision may not be possible, e.g., due to the device exchanging communication with only one or two access points. In some embodiments, for at least some of these cases, the processor outputs an alert specifying the type of unwanted device and, optionally, a list of one or more rooms with high sensitivity scores with respect to the type of unwanted device. The receiver of the alert can then check all relevant rooms for the unwanted device.

In general, processor 34 may be embodied as a single processor, or as a cooperatively networked or clustered set of processors. The functionality of processor 34 may be implemented solely in hardware, e.g., using one or more fixed-function or general-purpose integrated circuits, Application-Specific Integrated Circuits (ASICs), and/or Field-Programmable Gate Arrays (FPGAs). Alternatively, this functionality may be implemented at least partly in software. For example, processor 34 may be embodied as a programmed processor comprising, for example, a central processing unit (CPU) and/or a Graphics Processing Unit (GPU). Program instructions, including software programs, and/or data may be loaded for execution and processing by the CPU and/or GPU. The program instructions and/or data may be downloaded to the processor in electronic form, over a network, for example. Alternatively or additionally, the program instructions and/or data may be provided and/or stored on non-transitory tangible media, such as magnetic, optical, or electronic memory. Such program instructions and/or data, when provided to the processor, produce a machine or special-purpose computer, configured to perform the tasks described herein.

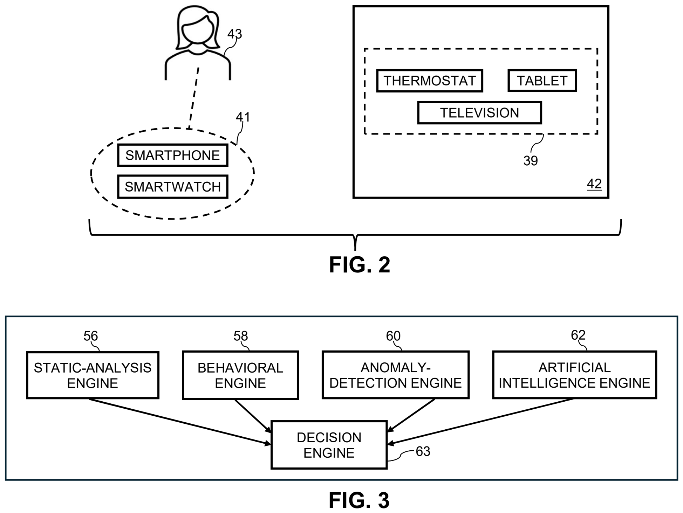

Reference is now made to Fig. 2, which is a schematic representation of baseline location-related attributes identified in accordance with some embodiments of the present invention.

In some embodiments, based on the data from the Wi-Fi management system, the processor identifies one or more baseline location-related attributes of the wireless-enabled devices on property 22. Subsequently, based on the baseline location-related attributes and the identified characteristics of a particular device, the processor may output an alert 35 (Fig. 1) indicating that the particular device may be unwanted at least at its estimated location.

For example, in some embodiments, the processor identifies, for at least one room 42, a room signature 39 including those of the devices that are usually co-located in the room. (In some cases, room signature 39 may include only a single device, or no devices at all.) By way of example, Fig. 2 shows room signature 39 including several wireless-enabled devices commonly found together in a hotel room: a tablet computer, a thermostat, and a television. Subsequently, the processor outputs an alert in response to a deviation from the room signature.

For example, the processor may ascertain, as described above with reference to Fig. 1, that a particular device is likely located in room 42. If room signature 39 for the room does not include this device, the location of the device in the room causes a deviation from the room signature. In response to this deviation, the processor may output an alert. For example, if the device is a video camera, the alert may indicate a possibly malicious surveillance device. Alternatively, the alert may indicate that the device may be unauthorized. Such may be the case if, for example, room 42 is a computer room or machine room, room signature 39 includes only one type of computer or machine (which is known or assumed to be the only authorized type), but a different type of computer or machine was introduced into the room.

Conversely, if room signature 39 includes the particular device but the processor ascertains, as described above with reference to Fig. 1, that the device is likely not located in the particular room, the absence of the device from the room causes a deviation from the room signature. In response to this deviation, the processor may output an alert. For example, given the room signature in Fig. 2, if the tablet computer is not in the room, the alert may indicate that the tablet computer may have been removed from the room.

Alternatively or additionally, based on the data from the Wi-Fi management system, the processor identifies respective person signatures 41 for one or more people on the property, each person signature 41 including those devices that are usually co-located on a respective person 43, e.g., by virtue of being worn or carried by person 43. In some cases, person signature 41 includes a single device, such as a smartphone. In other cases, person signature 41 includes multiple devices. To identify a multi-device person signature 41, the processor typically identifies a group of devices that tend to have the same general location, and/or that tend to be simultaneously connected to the same access point. By way of example, Fig. 2 shows person signature 41 including a smartphone and a smartwatch.

Subsequently, the processor outputs an alert based on person signatures 41. For example, in some embodiments, the processor outputs an alert in response to a particular device being included by a person signature 41 but not being co-located with one or more other devices included by the person signature. For example, for the person signature in Fig. 2, if the smartwatch leaves the hotel lobby but the smartphone remains, the alert may indicate that the smartphone may have been forgotten in the lobby. Alternatively or additionally, the processor ascertains, based on the person signatures, whether the room in which a particular device is located is likely occupied. For example, for the person signature in Fig. 2, if the smartphone and smartwatch are seen to enter the room, the room is assumed to be occupied; conversely, if smartphone and smartwatch are seen to leave the room (and no person-signature devices remain in the room), the room is assumed to be unoccupied. The processor then outputs an alert in response to ascertaining whether the room is likely occupied. In general, whether the occupancy or vacancy of the room is cause for an alert depends on the type of room and/or the type of device.

In some cases, a device may change, e.g., periodically, its identifier, such as its MAC address. Advantageously, however, identifying one or more other devices that are usually co-located with the device - e.g., one or more other devices belonging to the same room signature 39 or person signature 41 as the device - facilitates tracking the device. In other words, the processor can track the device despite the device having changed its identifier, based on the device being co-located with the other devices, since it can be safely assumed that the new identifier belongs to the same device that was previously co-located with these other devices, rather than to a new device. Subsequently, the processor may output an alert (or refrain from outputting an alert) based on this tracking.

For example, given the person signature shown in Fig. 2, as long as the smartphone continues to be co-located with the smartwatch, the processor can track the smartphone despite the smartphone changing its MAC address. For example, it will be supposed that person 43 enters a room with both devices, the smartphone changes its MAC address while still co-located with the smartwatch, and then the person leaves the room with the smartwatch but without the smartphone. In this case, despite the changed MAC address, the processor knows that the smartphone is still in the room. Therefore, the processor may output an alert for the smartphone having been left in the room. In contrast, if the processor would not track the smartphone through the MAC-address changes, the processor might think the smartphone was turned off, and the new MAC address belongs to a different smartphone belonging to a different person.

Reference is now made to Fig. 3, which is a module diagram for various modules referred to herein as "analysis engines," which are executed by processor 34 (Fig. 1) in accordance with some embodiments of the present invention.

In some embodiments, the analysis engines include a static-analysis engine 56, which identifies static (non-behavioral) characteristics of the devices, such as the identifiers of the devices. Alternatively or additionally, the analysis engines include a behavioral engine 58, which identifies behavioral characteristics of the devices, such as the times and frequencies with which the devices communicate. Alternatively or additionally, the analysis engines include an anomaly-detection engine 60, which identifies anomalies with respect to room signatures and/or person signatures, as described above with reference to Fig. 2. Alternatively or additionally, the analysis engines include an artificial intelligence engine 62, which inputs the characteristics of any device to a machine-learned model (e.g., a neural network) trained to identify unwanted devices, e.g., using a training set of labeled "wanted" and "unwanted" samples gathered from a large number of properties and devices.

In some embodiments, to decide whether a particular device is unwanted, the communication-related data gathered for the device is input into each of the analysis engines. Subsequently, the output of each of these modules - which, in some embodiments for at least some of the modules, includes a likelihood of the device being unwanted - is fed to a decision engine 63, which decides, using any suitable decision-making algorithm, whether to output an alert for the device in response to the analysis-engine outputs.

In some embodiments, at least one of the analysis engines bases its output on the output of at least one other analysis engine. For example, in some embodiments, device characteristics determined by static-analysis engine 56 and/or behavioral engine 58 are fed to artificial intelligence engine 62. Alternatively or additionally, output from artificial intelligence engine 62 is fed to one or more of the other analysis engines. For example, in some embodiments, artificial intelligence engine 62 learns the maximum durations that a person is expected to remain in the same room, as described above with reference to Fig. 1, selects the relevant maximum duration, and passes this duration to behavioral engine 58. Alternatively or additionally, artificial intelligence engine 62 computes a score indicating the risk associated with a particular device, and passes this score to one or more of the other analysis engines, which then use the score to compute the likelihood of the device being unwanted.

Thus, advantageously, the decision-making process integrates a range of techniques for identifying unwanted devices, thus increasing the accuracy and precision with which the alerts are generated. For an example of increased accuracy, the static-analysis engine might identify a wireless-enabled smoke detector, which would not be deemed unwanted, but the behavioral engine might identify a large volume of communicated data, which likely indicates that the device is a malicious surveillance device disguised as a smoke detector. Decision engine 63 may therefore output an alert, based on the output of the behavioral engine. For an example of increased precision, one of the first three engines might indicate that a certain device is unwanted at its current location, but artificial intelligence engine 62 might decide, correctly, that the device is not unwanted, given that other devices of the same type have been observed in similar locations in other properties. Decision engine 63 may therefore refrain from outputting an alert, based on the output of the artificial intelligence engine.

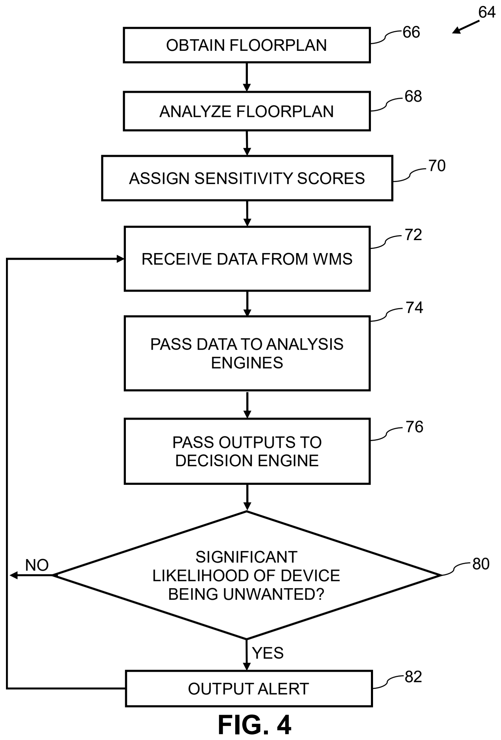

Reference is now made to Fig. 4, which is a flow diagram for a method 64 for identifying unwanted devices, in accordance with some embodiments of the present invention.

Method 64 begins with a floorplan-obtaining step 66, at which the processor obtains the floorplan of the property, as described above with reference to Fig. 1. In some embodiments, floorplan-obtaining step 66 is executed periodically, e.g., daily, to account for any changes in the layout of the property.

Subsequently to obtaining the floorplan, the processor, at a floorplan-analyzing step 68, analyzes the floorplan so as to ascertain the respective locations and types of rooms 42 and, in some embodiments, the locations of the access points in the property. Next, at a score-assigning step 70, the processor assigns respective sensitivity scores to the rooms.

Subsequently, at a data-receiving step 72, the processor receives data from Wi-Fi management system 38 (Fig. 1). Next, at a data-passing step 74, the processor passes the data to the analysis engines described above with reference to Fig. 3. Each analysis engine then generates an output specifying any possible unwanted devices along with, in some embodiments, likelihoods of these devices being unwanted. In some embodiments, one or more of the analysis engines base their output on the sensitivity scores.

In some embodiments, data relating to devices already assumed to be wanted is processed less frequently than data relating to other devices. In such embodiments, prior to data-passing step 74, the former data may be filtered out.

Subsequently, at an output-passing step 76, the outputs are passed to decision engine 63. The decision engine then integrates the outputs so as to decide, at a likelihood-ascertaining step 80, whether there is a significant likelihood of the device being unwanted. If yes, the processor outputs an alert at an alert-outputting step 82. Otherwise, the processor returns to data-receiving step 72.

### EXAMPLES

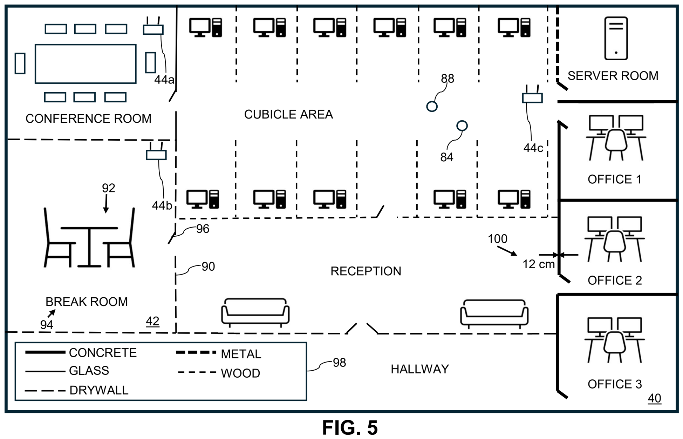

Reference is now made to Fig. 5, which is a schematic illustration of an example floorplan 40 that can be analyzed in accordance with some embodiments of the present invention.

As described above, in some embodiments, processor 34 (Fig. 1) analyzes floorplan 40 so as to ascertain the respective locations and types of rooms 42. Typically, the processor analyzes floorplan 40 by applying a computer-vision algorithm, which was trained on a training set of floorplans, to the floorplan. An example software product that implements a computer-vision algorithm for floorplan analysis is the Architectural Drawing Recognition System^{™} provided by Businessware Technologies of 543 Kirkham LN, League City, TX, USA.

Typically, to locate the rooms, the processor identifies any drawings of walls 90 and/or doors 96 in the floorplan. In general, the processor may represent the location of each room using any suitable convention. For example, in some embodiments, the processor represents the location by the number of the floor on which the room is located (or the height of the room from a predefined baseline elevation), the coordinates of the horizontal centroid of the room, and respective vectors from the centroid to the walls 90 that bound the room.

Typically, to classify the rooms, the processor identifies drawings, such as icons 92, that indicate the room types. For example, a conference table icon may indicate a conference room, a bed icon may indicate a hotel room, and a toilet icon may indicate a restroom. Alternatively or additionally, the processor identifies text 94 indicative of the room types, and/or other indicative features such as the dimensions of the rooms.

In some embodiments, the processor further locates at least some of access points 44, e.g., by identifying icons of the access points in the floorplan as shown in Fig. 5.

In some embodiments, the processor further identifies the respective materials of signal-attenuating structures such as walls 90. For example, in some floorplans, different materials are represented differently, such that the processor can identify each material by virtue of having learned its representation and/or by referring to a key 98 that explicitly indicates the representation.

In some embodiments, the processor further identifies the thicknesses of any signal-attenuating structures such as walls 90. For example, in some cases, the thickness with which each such structure is drawn corresponds to the actual thickness of the structure, in that the actual thickness is scaled down by a scale factor explicitly indicated in the floorplan; hence, the processor can compute the actual thickness by reversing this scaling. Alternatively, the thickness of each structure is indicated explicitly by an indicator 100.

Fig. 5 shows a hypothetical preliminary estimated location 84 of a device in the cubicle area. As described above, in some embodiments, the processor refines such an estimate based on the signal strengths received by access points 44, the materials of the intervening signal-attenuating structures as indicated in the floorplan, and optionally, the thicknesses of these structures as indicated in the floorplan. For example, in Fig. 5, the device communicates with an access point 44a in the conference room, another access point 44b in the break room, and another access point 44c in the cubicle area. Due to the attenuation of the walls 90 that separate the conference room and break room from the cubicle area, preliminary estimated location 84 is inaccurate, being too far from the conference room and break room. On the other hand, after accounting for this attenuation, the processor computes a more accurate estimated location 88.

For embodiments in which the thicknesses of the signal-attenuating structures are not ascertained from the floorplan, the processor assumes average thicknesses. By way of example, attenuation values for the walls shown in Fig. 5, assuming a signal at 2.4 GHz and average thicknesses, could be -13 dBm for the glass walls, -15 dBm for the metal walls, -12 dBm for the concrete walls, -4 dBm for the drywall, and -2 dBm for the wooden cubicle dividers. (At 5 GHz, these values would typically be higher.) Thus, for example, if the received signal strength indicator for access point 44a is -58 dBm, the processor may adjust this to -45 dBm to account for the glass wall of the conference room. Similarly, if the received signal strength indicator for access point 44b is -60 dBm, the processor may adjust this to -56 dBm to account for the drywall wall of the break room. (For access point 44c, no adjustment is necessary.) The processor may then compute the distance from each of the three access points based on the received signal strength indicators, e.g., using the formula d = 10^((RSSI_0 - RSSI)/(10*n)), where d is the distance, RSSI_0 is a reference signal strength at one meter, RSSI is the received signal strength indicator (adjusted, if necessary, as described immediately above), and n is a signal path loss exponent. Subsequently, the processor may compute estimated location 88 by triangulating the three computed distances.

Embodiments of the present invention have been described with particular reference to the examples illustrated. However, it will be appreciated that variations and modifications may be made to the examples described within the scope of the appending claims.

## Claims

1. A method for monitoring a property (22), the method comprising:
receiving by a processor (34), from a Wi-Fi management system (38) of the property, data relating to communication exchanged between one or more wireless-enabled devices on the property and one or more Wi-Fi access points (44) on the property;
based on the data, identifying:
one or more baseline location-related attributes of the devices, and
one or more characteristics and an estimated location (88) of a particular one of the devices (24); and
based on the baseline location-related attributes and the characteristics, outputting an alert (35) indicating that the particular device may be unwanted at least at the estimated location.

2. The method according to claim 1, wherein the data includes the estimated location (88), and wherein identifying the estimated location comprises extracting the estimated location from the data.

3. The method according to claim 1, wherein the data includes respective estimated distances (52) from one or more of the Wi-Fi access points (44) to the particular device (24), and wherein identifying the estimated location (88) comprises computing the estimated location based on the estimated distances.

4. The method according to claim 1, wherein identifying the estimated location (88) comprises:
extracting, from the data, a preliminary estimated location (84) of the particular device (24) and respective signal strengths with which the communication from the particular device was received by the access points (44);
identifying, from a floorplan (40) of the property (22), respective materials of any signal-attenuating structures (47) between the preliminary estimated location and the access points;
computing respective estimated distances (52) between the particular device and the access points, based on the signal strengths and the materials of the signal-attenuating structures; and
computing the estimated location based on the estimated distances.

5. The method according to claim 4, further comprising identifying, from the floorplan (40), respective thicknesses of the signal-attenuating structures (47), wherein computing the estimated distances (52) comprises computing the estimated distances based on the thicknesses.

6. The method according to claim 1, further comprising, based on the data, identifying an estimated location history of the particular device (24) on the property, wherein the alert (35) further indicates the estimated location history.

7. The method according to claim 1, wherein the characteristics include a type of the particular device (24).

8. The method according to claim 1, wherein the characteristics include behavioral characteristics describing a manner in which the particular device (24) communicates.

9. The method according to claim 1,
wherein identifying the baseline location-related attributes comprises identifying one or more others of the devices that are usually co-located with the particular device (24),
wherein the method further comprises tracking the particular device despite the particular device having changed an identifier of the particular device, based on the particular device being co-located with the others of the devices, and
wherein outputting the alert (35) comprises outputting the alert based on tracking the particular device.

10. The method according to claim 1,
wherein the property (22) has multiple rooms (42),
wherein the method further comprises ascertaining respective locations of the rooms by analyzing a floorplan (40) of the property,
wherein identifying the baseline location-related attributes comprises identifying, for a particular one of the rooms, a room signature (39) including those of the devices that are usually co-located in the particular room, and
wherein outputting the alert (35) comprises outputting the alert in response to a deviation from the room signature.

11. The method according to claim 10, wherein the room signature (39) does not include the particular device (24), and wherein the method further comprises, based on the estimated location of the particular device and the locations of the rooms (42), ascertaining that the particular device is likely located in the particular room, thereby causing the deviation.

12. The method according to claim 10, wherein the room signature (39) includes the particular device (24), and wherein the method further comprises, based on the estimated location of the particular device and the locations of the rooms (42), ascertaining that the device is likely not located in the particular room, thereby causing the deviation.

13. The method according to claim 1,
wherein identifying the baseline location-related attributes comprises identifying respective person signatures (41) for one or more people (43) on the property (22), each person signature including those of the devices that are usually co-located on a respective one of the people, and
wherein outputting the alert (35) comprises outputting the alert based on the person signatures.

14. A system (20) for monitoring a property (22), the system comprising:
a communication interface (36); and
a processor (34), configured to:
receive via the communication interface, from a Wi-Fi management system (38) of the property, data relating to communication exchanged between one or more wireless-enabled devices on the property and one or more Wi-Fi access points (44) on the property,
based on the data, identify:
one or more baseline location-related attributes of the devices, and
one or more characteristics and an estimated location (88) of a particular one of the devices (24), and
based on the baseline location-related attributes and the characteristics, output an alert (35) indicating that the particular device may be unwanted at least at the estimated location.

15. A computer software product for monitoring a property (22), the product comprising a tangible non-transitory computer-readable medium in which program instructions are stored, which instructions, when read by a processor (34), cause the processor to:
receive, from a Wi-Fi management system (38) of the property, data relating to communication exchanged between one or more wireless-enabled devices on the property and one or more Wi-Fi access points (44) on the property,
based on the data, identify:
one or more baseline location-related attributes of the devices, and
one or more characteristics and an estimated location (88) of a particular one of the devices (24), and
based on the baseline location-related attributes and the characteristics, output an alert (35) indicating that the particular device may be unwanted at least at the estimated location.
